# EUROPÄISCHE PATENTSCHRIFT

(11) **EP 1 925 482 B1**
(45) Veröffentlichungstag und Bekanntmachung des Hinweises auf die Patenterteilung: **28.09.2011**
(21) Anmeldenummer: 07020268.4
(22) Anmeldetag: 17.10.2007
(51) Int. Cl.: B60J 7/12

(54) **Verdeck für ein Cabriolet**
Soft top for a convertible
Capote pour un cabriolet

(30) Priorität: 23.11.2006 DE 102006055189
(43) Veröffentlichungstag der Anmeldung: 28.05.2008
(73) Patentinhaber: Dr. Ing. h.c. F. Porsche AG, 70435 Stuttgart (DE)
(72) Erfinder: Armbruster, Reiner, 75417 Muehlacker (DE); Knirsch, Joachim, 73460 Hüttlingen (DE)

(56) Entgegenhaltungen:
- DE-A1- 3 834 490
- DE-A1- 4 123 283
- DE-B1- 2 327 485
- DE-C1- 4 438 253
- DE-C1- 19 903 411

## Beschreibung

Die vorliegende Erfindung betrifft ein Verdeck für ein Cabriolet mit den Merkmalen des Oberbegriffs des Anspruchs 1. Die Erfindung betrifft außerdem ein mit einem derartigen Verdeck ausgestattetes Cabriolet.

Aus der DE 199 03 411 C1 ist ein Verdeck für ein Cabriolet bekannt, welches zwischen einer Schließstellung und einer Ablagestellung verstellbar ist und ein Verdeckgestänge aufweist, das eine Mehrzahl an Gestängenteilen umfasst. Darüber hinaus weist das Verdeck einen vom Verdeckgestänge getragenen Verdeckbezugsstoff auf, wobei der Verdeckbezugsstoff in der Ablagestellung in Falten zusammengelegt ist. Um eine definierte Faltenbildung am Verdeckbezugsstoff zu gewährleisten, ist ein an diesem angreifender Faltenleger vorgesehen, der dem Verdeckbezugsstoff beim Überführen von der Schließstellung in die Ablagestellung zumindest eine definierte Falte aufprägt.

Aus der DE 37 26 430 C1 ist ein Klappverdeck mit einem, einen Bezug tragenden Verdeckgestänge bekannt. Im Bereich der Seitenkanten der Sichtöffnung der Heckscheibe ist jeweils an der Innenseite des Bezugs ein aus einem Gummiband bestehendes Zugfederelement mit Vorspannung festgelegt. Da sich diese beim Hochschwenken des rückwärtigen Bereichs des Klappverdecks zusammenziehen, bildet sich selbsttätig ein definierter, sich über die ganze Breite der Heckscheibe erstreckender Faltenwurf aus.

Weitere Verdecke mit einem erzwungenen Faltenwurf sind beispielsweise aus der DE 297 07 036 U1 und aus der DE 39 07 227 C1 bekannt.

Die DE 44 38 253 C1 zeigt ein Faltverdeck für ein Fahrzeug, wobei eine Einrichtung zum definierten Falten der in einem mittleren Bereich der Quererstreckung des Verdeckbezugs angeordneten flexiblen Heckscheibe vorgesehen ist. Diese Einrichtung wird durch beiderseits der seitlichen Längsränder der Heckscheibe verlaufende federnde Elemente gebildet. Ein unteres Ende jedes federnden Elements ist an einem querverlaufenden Abschnitt eines karosserieseitig feststehenden heckseitigen Spannbügels befestigt, wogegen das obere Ende jedes federnden Elements einen gerundeten Formverlauf aufweist und sich an der Innenseite des Verdeckbezugs abstützt. Beide federnden Elemente verlaufen annähernd gleichgerichtet zu unteren Randbereichen von seitlichen Längsrändern der flexiblen Sichtscheibe.

Die vorliegende Erfindung beschäftigt sich mit dem Problem, für ein Verdeck der gattungsgemäßen Art beziehungsweise für ein damit ausgestattetes Cabriolet eine verbesserte oder zumindest eine andere Ausführungsform anzugeben, die sich insbesondere durch eine stets gleiche, da erzwungene Faltung des Verdecks in dessen Ablagezustand auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, an einem hinteren Seitenbereich eines Verdecks für ein Cabriolet jeweils zumindest einen linearen, stabförmigen Faltenleger vorzusehen, welcher beim Öffnen des Verdecks ein Zusammenziehen eines Verdeckbezugs im Bereich des stabförmigen Faltenlegers verhindert und dadurch eine Faltung an einem anderen Ort erzwingt. Die so erzwungene Faltung wiederholt sich bei jedem Öffnungsvorgang des Verdecks stets gleich, so dass das erfindungsgemäße Verdeck sich beim Öffnen stets gleich ablegt. Der zumindest eine lineare, stabförmige Faltenleger ist dabei Teil einer jeweils am Seitenbereich des Verdeckbezugs angeordneten Falteinrichtung und mit seinem einen Längsende am Verdeckbezug und mit seinem anderen Längsende beispielsweise in einem Verdeckgestänge angeordnet, so dass auf jeden Fall eine Faltung bzw. Verkürzung des Verdeckbezugs in Längsrichtung des stabförmigen Faltenlegers unterbunden wird.

Zweckmäßig sind die Faltenleger aus Kunststoff, aus Fieberglas oder aus Metall, insbesondere aus Federblech, ausgebildet. All diese Materialien erlauben eine nahezu frei wählbare Formgebung sowie jeweils genau vorher bestimmbare Materialeigenschaften. Zudem sind insbesondere Faltenleger aus Kunststoff sehr kostengünstig herzustellen, was sich positiv auf die Fertigungskosten des Verdecks bzw. eines mit dem erfindungsgemäßen Verdeck ausgestatteten Cabriolets auswirkt. Insbesondere im Sportwagenbau ist dabei auch vorstellbar, dass hochwertige Materialien, wie beispielsweise Kohlefaser, eingesetzt werden, welche einerseits eine sehr hohe Festigkeit bzw. Steifigkeit aufweisen und andererseits ein geringes Eigengewicht besitzen.

Bei einer vorteilhaften Weiterbildung der erfindungsgemäßen Lösung weist jede Falteinrichtung lineare Faltenleger auf, die geneigt zueinander, insbesondere V-förmig zueinander angeordnet sind. Diese Anordnung wirkt sich besonders günstig auf die gewünschte Faltung des Verdeckbezugs aus, wobei eine Längsrichtung der Faltenleger auf einen Schwenkpunkt des Verdecks an der Karosserie gerichtet sein kann. Um eine besonders flache und bauraumsparende Ausführung des Faltenlegers, z.B. als Federblech, mit einer ausreichenden Längssteifigkeit zu versehen, ist der Faltenleger durch einen vorhandenen Längsgurt geführt , welcher beim Ablegen ein Ausbeulen des Faltenlegers in dessen Querrichtung verhindert. Bei zwei Faltenlegern werden diese an zwei voneinander beabstandeten Stellen durch den Längsgurt geführt.

Gemäß der erfindungsgemäßen Lösung greifen die Faltenleger zumindest an einem ihrem Längsenden in eine innenseitig am Verdeckbezug angeordnete Tasche ein und sind in dieser am Verdeckbezug gehalten. Eine derartige Tasche kann beispielsweise auf den Verdeckbezug aufgebügelt bzw. aufgeklebt werden und stellt eine einfache und zuverlässige Halterung des stabförmigen Faltenlegers am Verdeckbezug dar. Vorzugsweise ist dabei die den stabförmigen Faltenleger aufnehmende Tasche von außen und innen nicht sichtbar, da der Verdeckbezug von innen mit einem Innenhimmel verkleidet ist und sich die Tasche somit zwischen einer Innenseite des Verdeckbezugs und einer dem Verdeckbezug zugewandten Seite des Innenhimmels versteckt befindet. Dies bietet den großen Vorteil, dass die Falteinrichtung optisch nicht wahrnehmbar ist und dadurch ein äußeres Erscheinungsbild des Verdecks bzw. des Cabriolets nicht beeinträchtigt.

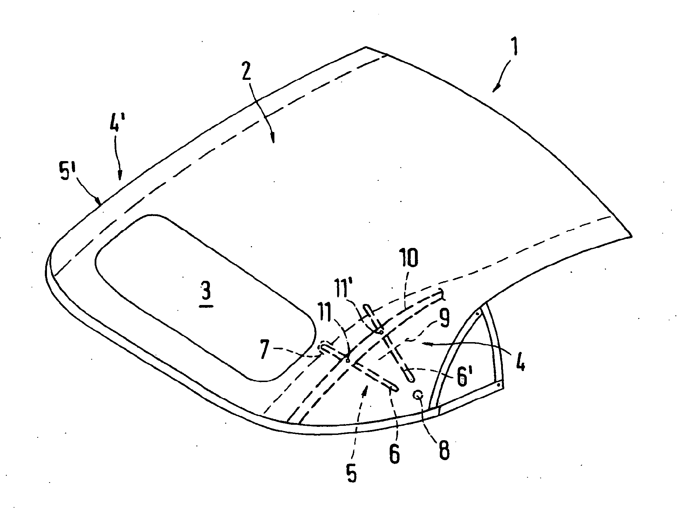

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

Die einzige Zeichnung zeigt eine Seitenansicht auf ein geschlossenes erfindungsgemäßes Verdeck, wobei die Falteinrichtung zumindest schematisch dargestellt ist.

Entsprechend der Zeichnung weist ein erfindungsgemäßes Verdeck 1 einen flexiblen Verdeckbezug 2, üblicherweise einen wasserabweisenden Textilbezug, auf. Das Verdeck 1 ist dabei in bekannter Weise zwischen einer Schließstellung, wie sie in der Zeichnung dargestellt ist, und einer Ablagestellung verstellbar, in welcher ein Fahrgastraum eines mit dem Verdeck 1 ausgestatteten Cabriolets offen ist. An einem hinteren Endbereich des Verdecks 1 kann darüber hinaus eine starre oder flexible Heckscheibe 3 angeordnet sein, welche einem Fahrer des Cabriolets eine Sicht nach hinten ermöglicht.

Um in seiner Ablagestellung bzw. beim Öffnen des Verdecks 1 möglichst eine stets eine gleiche Faltung des Verdeckbezugs 2 erreichen zu können, greift an einem hinteren Seitenbereich 4, 4' des Verdeckbezugs 2 jeweils zumindest eine Falteinrichtung 5, 5' an, welche dem Verdeckbezug 2 beim Überführen von der Schließstellung die Ablagestellung jeweils zumindest eine definierte Falte aufprägt.

Erfindungsgemäß weist dabei jede Falteinrichtung 5, 5' zumindest einen linearen, stabförmigen Faltenleger 6, 6' auf, welcher beim Öffnen des Verdecks 1 und dem nachfolgenden Überführen in dessen Ablagestellung eine Faltung 9 des Verdeckbezugs 2 quer zur Längsrichtung des Faltenlegers 6 verhindert. Im, in der Zeichnung gezeigten Ausführungsbeispiel weist dabei jede Falteinrichtung 5 jeweils zwei Faltenleger 6, 6' auf, die darüber hinaus geneigt zueinander verlaufen, insbesondere V-förmig zueinander angeordnet sind.

Die linearen Faltenleger 6, 6' sind dabei vorzugsweise als biegeweiche Stäbe ausgebildet. Als Material für einen derartigen Faltenleger 6, 6' kommt dabei beispielsweise Kunststoff, Fieberglas oder Metall in Frage, wobei insbesondere bei aus Metall gefertigten Faltenlegern 6, 6' sogenannte Federbleche oder Metalle mit einem Formgedächtnis zum Einsatz kommen.

Bei Bedarf können die Faltenleger 6, 6' eine vordefinierte Form aufweisen, um einen spannungsfreien Zustand im geschlossenen Verdeck 1 zu gewährleisten und eine Abzeichnung am Verdeckbezug 2 zu verhindern. Die Falterleger 6, 6' sind zum Spannen des Verdeckbezugs 2 zumindest an einem ihrer Längsenden mit dem Verdeckbezug 2 verbunden, während sie an ihrem anderen Längsende beispielsweise ebenfalls mit dem Verdeckbezug 2, mit einem nicht näher bezeichneten Verdeckgestänge oder mit einer Karosserie des Cabriolets verbunden sind. Eine dabei vorzugsweise eingesetzte Verbindung zwischen dem Faltenleger 6, 6' und dem Verdeckbezug 2 besteht beispielsweise aus einer nur angedeuteten Tasche 7, welche innenseitig am Verdeckbezug 2 angeordnet ist und in welche der Faltenleger 6, 6' mit einem seiner Längsenden eingreift. Eine derartige Tasche 7 kann beispielsweise mit dem Verdeckbezug 2 verklebt oder vernäht sein. Insbesondere eine Verklebung kann dabei durch ein Aufbügeln einer derartigen Tasche 7 erreicht werden. Denkbar ist natürlich auch, dass zumindest einer der Faltenleger 6, 6' mit beiden Längsenden in am Verdeckbezug 2 angeordneten und sich gegenüberliegenden Taschen 7 eingreift und dadurch eine Faltung 9 bzw. Verkürzung des Verdeckbezugs 2 in Längsrichtung des Faltenlegers 6, 6' unterbindet.

Alternativ hierzu kann zumindest einer der Faltenleger 6, 6' mit seinem nicht in eine Tasche 7 eingreifenden Längsende am Verdeckgestänge bzw. an der Karosserie des Cabriolets befestigt sein und dadurch ebenfalls ein Spannen des Verdeckbezugs 2 ermöglichen. Derartige Taschen 7 haben den großen Vorteil, dass eine Montage des erfindungsgemäßen linearen, stabförmigen Faltenlegers 6, 6' am Verdeckbezug 2 sehr einfach möglich ist, da der Faltenleger 6, 6' lediglich in die Tasche 7, eingeschoben werden muss. Die Tasche 7 ist dabei an eine Innenseite des Verdeckbezugs 2 angeordnet und wird somit von einem die Innenseite des Verdeckbezugs 2 überziehenden Himmel überdeckt. Demnach sind weder die Tasche 7 noch die Faltenleger 6, 6' beim fertiggestellten Verdeck 1 sichtbar, wodurch ein ästhetischer Gesamteindruck des Verdecks 1 sowohl von Innen als auch von Außen nicht beeinträchtigt wird.

Um eine sehr flache und bauraumsparende Variante des Faltenlegers 6, 6', z.B. als Federblech, mit einer ausreichenden Längssteifigkeit zu versehen, wird dieser durch einen vorhandenen Längsgurt 10 geführt, welcher beim Ablegen ein Ausbeulen des Faltenlegers 6, 6' in dessen Querrichtung verhindert. Bei zwei Faltenlegern 6, 6' werden diese an zwei voneinander beabstandeten Stellen 11, 11' durch den Längsgurt 10 geführt.

Wie der Zeichnung weiter zu entnehmen ist, sind die Faltenleger 6, 6' üblicherweise im Bereich einer C-Säule des Cabriolets am Verdeck 1 angeordnet, wobei jedem der Seitenbereiche 4, 4' selbstverständlich eine Falteinrichtung 5, 5' mit jeweils zumindest einem Faltenleger 6, 6' zugeordnet ist. Eine Orientierung der einzelnen Faltenleger 6, 6' kann dabei, wie in der Zeichnung gezeigt, V-förmig zueinander ausgeprägt sein, denkbar sind aber auch andere Ausrichtungen bzw. Positionierungen, welche bewirken, dass dem Verdeckbezug 2 beim Überführen von der Schließstellung in die Ablagestellung jeweils zumindest eine definierte Falte aufgeprägt wird.

Zusätzlich zum linearen, stabförmigen Faltenleger 6, 6' ist gemäß der Zeichnung ein punktuell am Verdeckbezug 2 angreifender Faltenleger 8 vorgesehen, welcher beispielsweise über ein nicht gezeigtes Federelement mit dem Verdeckgestänge bzw. der Karosserie des Cabriolets verbunden ist. Der punktuell am Verdeckbezug 2 angreifende Faltenleger 8 kann dabei insbesondere im Bereich eines gedachten Schnittpunktes der verlängerten linearen Faltenleger 6, 6' angeordnet sein, wobei selbstverständlich auch eine davon abweichende Anordnung denkbar ist, sofern diese die zuverlässige und stets gleiche Faltung des Verdeckbezugs 2 beim Öffnen des Verdecks 1 gewährleistet.

## Patentansprüche

1. Verdeck (1) für ein Cabriolet, das zwischen einer Schließstellung und einer Ablagestellung verstellbar ist, umfassend einen flexiblen Verdeckbezug (2), an dessen hinteren Seitenbereichen (4, 4') jeweils zumindest eine Falteinrichtung (5, 5') angreift, welche dem Verdeckbezug (2) beim Überführen von der Schließstellung in die Ablagestellung jeweils zumindest eine definierte Falte aufprägt, wobei jede Falteinrichtung (5, 5') zumindest einen linearen stabförmigen Faltenleger (6, 6') aufweist, **dadurch gekennzeichnet, dass** der zumindest eine stabförmige Faltenleger (6, 6') durch einen Längsgurt (10) hindurchgeführt ist, welcher beim Ablegen ein Ausbeulen des Faltenlegers (6, 6') in dessen Querrichtung verhindert, wobei ein der Heckscheibe (3) zugewandtes Längsende des Faltenlegers (6, 6') in eine an der Innenseite des Verdeckbezugs (2) angeordnete Tasche (7) eingreift und in dieser am Verdeckbezug (2) gehalten ist, wogegen das andere Längsende des stabförmigen Faltenlegers (6, 6) mit einem Verdeckgestänge verbunden ist und dass beim Überführen des Verdecks (1) in die Ablagestellung durch den zumindest einen stabförmigen Faltenleger (6, 6') eine Faltung bzw. Verkürzung des Verdeckbezugs (2) in Längsrichtung des stabförmigen Faltenlegers (6, 6') unterbunden wird.

2. Verdeck nach Anspruch 1, **dadurch gekennzeichnet, dass** die linearen Faltenleger (6, 6') als biegeweiche Stäbe ausgebildet sind.

3. Verdeck nach Anspruch 1 oder 2, **dadurch gekennzeichnet, dass** die Faltenleger (6, 6') aus Kunststoff, aus Fiberglas oder aus Metall, insbesondere aus Federblech, ausgebildet sind.

4. Verdeck nach einem der Ansprüche 1 bis 3, **dadurch gekennzeichnet, dass** jede Falteinrichtung (5, 5') zwei lineare Faltenleger (6, 6') aufweist.

5. Verdeck nach Anspruch 4, **dadurch gekennzeichnet,**
- **dass** die Faltenleger (6, 6') der jeweiligen Falteinrichtung (5, 5') geneigt zu einander verlaufen, und/oder
- **dass** die Faltenleger (6, 6') der jeweiligen Falteinrichtung (5, 5') V-förmig zueinander angeordnet sind.

6. Verdeck nach einem der Ansprüche 1 bis 5, **dadurch gekennzeichnet, dass** die Faltenleger (6, 6') im Bereich einer C-Säule des Cabriolets am Verdeck (1) angeordnet sind.

7. Verdeck nach einem der Ansprüche 1 bis 6, **dadurch gekennzeichnet, dass** zusätzlich ein punktuell am Verdeckbezug (2) angreifender Faltenleger (8) vorgesehen ist.

8. Verdeck nach Anspruch 7, **dadurch gekennzeichnet, dass** der punktuell am Verdeckbezug (2) angreifende Faltenleger (8) im Bereich eines gedachten Schnittpunktes der verlängerten linearen Faltenleger (6, 6') angeordnet ist.

9. Cabriolet mit einem Verdeck (1) nach einem der Ansprüche 1 bis 8.

## Claims

1. Soft top (1) for a convertible, which can be displaced between a closed position and a put-away position, comprising a flexible soft top cloth (2), the rear side regions (4, 4') of which each have at least one folding device (5, 5') acting on them, impressing at least one defined fold in each case on the soft top cloth (2) during the transfer from the closed position into the put-away position, wherein each folding device (5, 5') has at least one linear rod-shaped folding mechanism (6, 6'), **characterized in that** the at least one rod-shaped folding mechanism (6, 6') is guided through a longitudinal strap (10) which, during the putting-away operation, prevents the folding mechanism (6, 6') from bulging in the transverse direction thereof, one longitudinal end of the folding mechanism (6, 6'), which longitudinal end faces the rear window (3), engaging in a pocket (7) arranged on the inside of the soft top cloth (2) and being held on the soft top cloth (2) in said pocket, whereas the other longitudinal end of the rod-shaped folding mechanism (6, 6') is connected to a soft top linkage, and **in that**, during the transfer of the soft top (1) into the put-away position, the at least one rod-shaped folding mechanism (6, 6') prevents folding or shortening of the soft top cloth (2) in the longitudinal direction of the rod-shaped folding mechanism (6, 6').

2. Soft top according to Claim 1, **characterized in that** the linear folding mechanisms (6, 6') are designed as flexible rods.

3. Soft top according to Claim 1 or 2, **characterized in that** the linear folding mechanisms (6, 6') are formed from plastic, from fibreglass or from metal, in particular from spring sheet.

4. Soft top according to one of Claims 1 to 3, **characterized in that** each folding device (5, 5') has two linear folding mechanisms (6, 6').

5. Soft top according to Claim 4, **characterized**
- **in that** the folding mechanisms (6, 6') of the respective folding device (5, 5') run at an inclination with respect to each other, and/or
- **in that** the folding mechanism (6, 6') of the respective folding device (5, 5') are arranged in a V-shaped manner with respect to each other.

6. Soft top according to one of Claims 1 to 5, **characterized in that** the folding mechanisms (6, 6') are arranged on the soft top (1) in the region of a C pillar of the convertible.

7. Soft top according to one of Claims 1 to 6, **characterized in that** a folding mechanism (8) acting in a punctiform manner on the soft top cloth (2) is additionally provided.

8. Soft top according to Claim 7, **characterized in that** the folding mechanism (8) acting in a punctiform manner on the soft top cloth (2) is arranged in the region of an imaginary intersection point of the extended linear folding mechanisms (6, 6').

9. Convertible with a soft top (1) according to one of Claims 1 to 8.

## Revendications

1. Capote (1) pour un cabriolet, qui peut être déplacée entre une position fermée et une position de rangement, comprenant un revêtement de capote (2) flexible, au niveau des parties latérales arrière (4, 4') avec lequel vient en prise à chaque fois au moins un dispositif de pliage (5, 5'), qui produit sur le revêtement de capote (2) à chaque fois au moins un pli défini lors du transfert de la position fermée dans la position de rangement, chaque dispositif de pliage (5, 5') présentant au moins un formeur de pli (6, 6') linéaire en forme de baguette, **caractérisé en ce que** l'au moins un formeur de pli (6, 6') en forme de baguette est guidé à travers une sangle longitudinale (10), qui lors du rangement, empêche le formeur de pli (6, 6') de se déformer dans sa direction transversale, une extrémité longitudinale du formeur de pli (6, 6'), tournée vers la vitre arrière (3), venant en prise dans une cavité (7) disposée du côté intérieur du revêtement de capote (2), et étant maintenue dans celle-ci sur le revêtement de capote (2), tandis que l'autre extrémité longitudinale du formeur de pli (6, 6') en forme de baguette est connectée à une tringlerie de capote et **en ce que** lors du transfert de la capote (1) dans la position de rangement, un pliage ou un raccourcissement du revêtement de capote (2) dans la direction longitudinale du formeur de pli (6, 6') en forme de baguette est empêché par l'au moins un formeur de pli (6, 6').

2. Capote selon la revendication 1, **caractérisée en ce que** les formeurs de pli (6, 6') linéaires sont réalisés sous forme de baguettes souples flexibles.

3. Capote selon la revendication 1 ou 2, **caractérisée en ce que** les formeurs de pli (6, 6') sont réalisés en plastique, en fibre de verre ou en métal, notamment en tôle à ressort.

4. Capote selon l'une quelconque des revendications 1 à 3, **caractérisée en ce que** chaque dispositif de pliage (5, 5') présente deux formeurs de pli (6, 6') linéaires.

5. Capote selon la revendication 4, **caractérisée en ce que**
- les formeurs de pli (6, 6') du dispositif de pliage respectif (5, 5') s'étendent de manière inclinée les uns par rapport aux autres, et/ou
- **en ce que** les formeurs de pli (6, 6') du dispositif de pliage respectif (5, 5') sont disposés en forme de V les uns par rapport aux autres.

6. Capote selon l'une quelconque des revendications 1 à 5, **caractérisée en ce que** les formeurs de pli (6, 6') sont disposés dans la région d'une colonne C du cabriolet sur la capote (1).

7. Capote selon l'une quelconque des revendications 1 à 6, **caractérisée en ce qu'**il est en outre prévu un formeur de pli (8) venant en prise de manière ponctuelle avec le revêtement de capote (2).

8. Capote selon la revendication 7, **caractérisée en ce que** le formeur de pli (8) venant en prise de manière ponctuelle avec le revêtement de capote (2) est disposé dans la région d'un point d'intersection imaginaire des prolongements des formeurs de pli (6, 6') linéaires.

9. Cabriolet comprenant une capote (1) selon l'une quelconque des revendications 1 à 8.
